# EUROPÄISCHE PATENTANMELDUNG

(11) **EP 2 772 852 A1**
(43) Veröffentlichungstag der Anmeldung: **03.09.2014**
(21) Anmeldenummer: 13157245.5
(22) Anmeldetag: 28.02.2013
(51) Int. Cl.: G06F 9/445, G06F 9/45

(54) **Programmiersystem zum Importieren einer Software-Anwendung**

(71) Anmelder: Siemens Aktiengesellschaft, 80333 München (DE)
(72) Erfinder: Lange, Ronald, 90766 Fürth (DE); Opaterny, Thilo, 90453 Nürnberg (DE)

(57) **Zusammenfassung**

Die vorliegende Erfindung betrifft ein Programmiersystem zum Importieren einer Software-Anwendung (40, 42),
wobei im Programmiersystem eine Transport-Version (50, 51, 52, 53, 54, 55, 56, 57) der Software-Anwendung verfügbar ist und das Programmiersystem zum Erstellen der Software-Anwendung (40, 42) unter Verwendung der Transport-Version (50, 51, 52, 53, 54, 55, 56, 57) ausgebildet und eingerichtet ist,
wobei die Transport-Version (50, 51, 52, 53, 54, 55, 56, 57) der Software-Anwendung (40, 42) Information zur Erstellung eines Software-Bausteins (40, 42) der Software-Anwendung (40, 42) umfasst.

Dabei weist die Transport-Version (50, 51, 52, 53, 54, 55, 56, 57) der Software-Anwendung weiterhin eine Baustein-Schnittstellen-Information auf, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen.

Weiterhin ist das Programmiersystem derart ausgebildet und eingerichtet, dass
ermittelt wird, ob die in der Zusatzinformation enthaltenen Bedingungen in der Software-Anwendung erfüllt sind.

## Beschreibung

Die vorliegende Erfindung betrifft ein Programmiersystem zum Importieren einer Software-Anwendung, wobei im Programmiersystem eine Transport-Version der Software-Anwendung verfügbar ist und das Programmiersystem zum Erstellen der Software-Anwendung unter Verwendung der Transport-Version ausgebildet und eingerichtet ist, wobei die Transport-Version der Software-Anwendung Information zur Erstellung eines Software-Bausteins der Software-Anwendung umfasst.

Derartige Transport-Versionen sind beispielsweise bei elektronisch gespeicherten Dokumenten bekannt. So existiert z.B. ein Dokumenten-Transport-Format, welches mit dem Kürzel "RTF" (das sogenannte "Rich Text Format") bezeichnet wird. Wird ein solches RTF-Dokument in ein Textverarbeitungs-System, wie beispielsweise "Microsoft-Word" importiert, so erstellt das Textverarbeitungs-System aus diesem Transport-Dokument eine proprietäre Text-Datei mit der vorgegebenen und in Transport-Dokument neben der eigentlichen Text-Information ebenfalls kodierten Formatierung.

Die bekannten Dokumenten-Transport-Formate lassen sich nicht vollständig befriedigend als Transport-Formate für Software-Anwendungen oder Software-Code verwenden, da nur reinen Formatierungs-Informationen die Funktionalität einer Software-Anwendung nur ungenügend beschreiben.

Daher ist es eine Aufgabe der vorliegenden Erfindung, die Import- und/oder Export-Möglichkeiten für eine Software-Anwendung oder Software-Code zu verbessern.

Die Aufgabe wird gelöst von einem Programmiersystem mit den Merkmalen den Patentanspruch 1.

Ein derartiges Programmiersystem ist zum Importieren einer Software-Anwendung ausgebildet und eingerichtet, wobei im Programmiersystem eine Transport-Version der Software-Anwendung verfügbar ist und das Programmiersystem zum Erstellen der Software-Anwendung unter Verwendung der Transport-Version ausgebildet und eingerichtet ist. Dabei umfasst die Transport-Version der Software-Anwendung Information zur Erstellung eines Software-Bausteins der Software-Anwendung. Die Transport-Version der Software-Anwendung umfasst weiterhin eine Baustein-Schnittstellen-Information, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen.

Das Programmiersystem ist zudem derart ausgebildet und eingerichtet ist, dass ermittelt wird, ob die in der Zusatzinformation enthaltenen Bedingungen in der Software-Anwendung erfüllt sind.

Alternativ kann das Programmiersystem auch derart ausgebildet und eingerichtet sein, dass im Rahmen der Erstellung der Software-Anwendung Software-Elemente erstellt werden, durch deren Ablauf in einer Ablauf-Umgebung die für die Software-Anwendung die in der Zusatz information enthaltenen Bedingungen erfüllt werden.

Das Programmiersystem kann Z.B. als eine Software-Entwicklungs-Umgebung (z.B. Microsoft Visual Studio, Eclipse) ausgebildet sein. Weiterhin kann das Programmiersystem auch als ein Projektierungssystem (wie z.B. das sogenannte "TIA-Portal" oder "Step 7" der Siemens AG) für ein Automatisierungssystem (z.B. zur Erstellung und/oder Implementierung von Steuer- oder Anwendungsprogrammen für das Automatisierungssystem) ausgebildet sein oder ein solches Projektierungsystem umfasst ein derartiges Programmiersystem.

Dass eine Transport-Version der Software-Anwendung verfügbar ist kann z.B. bedeuten, dass es im Programmiersystem gespeichert, oder auf einem für das Programmiersystem verfügbaren Datenträger (CD, DVD, USB-Stick) gespeichert ist oder über ein Netzwerk für das Programmiersystem verfügbar ist.

Die Transport-Version der Software-Anwendung kann z.B. eine Information zur Erstellung eines Software-Bausteins oder mehrerer Software-Bausteine der Software-Anwendung oder auch aller Software-Bausteine der Software-Anwendung (was z.B. der gesamten Software-Anwendung entsprechen kann) aufweisen.

Ein Objekt des Software-Bausteins kann z.B. ein AufbauElemente (z.B. grundlegender Programm-Befehl oder grundlegendes Programm-Symbol) des Software-Bausteines, z.B. ein graphische oder Text-Software-Code-Elemente oder auch ein Funktionsblock, ein Funktionselement, ein graphisches oder Text-Softwarecode-Segmente sein, die jeweils Teil des Software-Bausteins sind.

So kann ein Objekt z.B. ein Datenformat oder die Bezeichnung eines Datenformats sein. Eine Zusatzinformation kann in diesem Fall z.B. eine Formatdefinition sein.

Weiterhin kann ein Objekt z.B. ein externer Baustein oder die Bezeichnung eines externen Bausteins sein, wobei die Zusatzinformation dann z.B. eine Zugriffsinformation auf den Baustein (wie z.B. ein Zugriffsformat, darin verwendete Variablen, ... .) sein kann.

Ein Objekt kann z.B. auch ein externes (globales) Objekt oder auch die Bezeichnung eines externen (globalen) Objekts sein wobei die Zusatzinformation dann z.B. eine Zugriffsinformation auf das globale Objekt (wie z.B. ein Zugriffsformat, darin verwendete Variablen, ....) sein kann.

Die Baustein-Schnittstellen-Information kann z.B. eine Zusatzinformation für ein Objekt des Software-Bausteins umfassen oder auch für mehrere Objekte oder auch alle Objekte des Software-Bausteins. Weiterhin können in der Transport-Version auch Zusatzinformationen für mehrere in der Software-Anwendung enthaltene Software-Bausteine oder auch alle Software-Bausteine der Software-Anwendung (d.h. z.B. auch der ganzen Software-Anwendung) enthalten sein.

Die Funktion des Objekts innerhalb Software-Bausteins kann z.B. erfüllt sein, wenn Funktionalität des Objekts beim Ablauf des Software-Bausteins innerhalb einer geeigneten Ablauf-Umgebung (z.B. im Rahmen des Ablaufs der Software-Anwendung oder einer weiteren Software-Anwendung, die den Software-Baustein umfasst) der vorgesehenen Funktionalität entspricht.

In einer vorteilhaften Ausgestaltung kann vorgesehen sein, dass Software-Elemente in die Software-Anwendung eingefügt und/oder erstellt werden, durch deren Ablauf oder deren Anwesenheit in einer Ablauf-Umgebung die für die Software-Anwendung die in der Zusatzinformation enthaltenen Bedingungen erfüllt werden,
und / oder
- Software-Elemente der Software-Anwendung derart geändert werden, dass durch deren Ablauf oder deren Anwesenheit in einer Ablauf-Umgebung für die Software-Anwendung die in der Zusatzinformation enthaltenen Bedingungen erfüllt werden.

Insbesondere kann vorgesehen sein, dass Software-Elemente in die Software-Anwendung eingefügt und/oder erstellt und/oder geändert werden, damit durch deren Ablauf oder durch deren Anwesenheit in einer Ablauf-Umgebung die für die Software-Anwendung die in der Zusatzinformation enthaltenen Bedingungen erfüllt werden, wenn die vorstehend genannte Ermittlung ergibt, dass diese Bedingungen nicht erfüllt sind.

Die neuen Software-Elemente können z.B. unter Verwendung der Zusatzinformationen eingefügt oder erstellt werden.

Ein Ablauf der Software-Anwendung in einer Ablauf-Umgebung kann z.B. einer Runtime-Version, einem Ablauf z.B. nach compilieren oder auch einem Ablauf in einer Interpreter-Umgebung entsprechen.

Ablauf-Umgebungen können z.B. Windows- oder Linux-PCs, Workstations oder ähnliches oder auch Automatisierungssysteme, Speicherprogrammierbare Steuerungen oder auch Simulations-Tools dafür sein.

Die vorstehend genannte Aufgabe wird weiterhin gelöst von einem Programmiersystem zum Importieren einer Software-Anwendung, wobei im Programmiersystem eine Transport-Version der Software-Anwendung verfügbar ist und das Programmiersystem zum Erstellen der Software-Anwendung unter Verwendung der Transport-Version ausgebildet und eingerichtet ist. Dabei umfasst die Transport-Version der Software-Anwendung Information zur Erstellung eines Software-Bausteins der Software-Anwendung.

Die Transport-Version der Software-Anwendung weist weiterhin eine Baustein-Schnittstellen-Information auf, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen. Dabei ist das Programmiersystem derart ausgebildet und eingerichtet, dass im Rahmen der Erstellung der Software-Anwendung Software-Elemente erstellt werden, durch deren Ablauf oder deren Anwesenheit in einer Ablauf-Umgebung die für die Software-Anwendung die in der Zusatzinformation enthaltenen Bedingungen erfüllt werden.

Dabei können das Programmiersystem sowie die vorstehend genannten Elemente diesbezüglich gemäß der vorliegenden Beschreibung eingerichtet und ausgebildet sein. Weiterhin kann die Zusatzinformation für das Objekt eine Zustandinformation zu dem Objekt umfassen. Solche Zustandsinformationen können z.B. als "Verwaltungs-Informationen" zum Objekt (wie z.B. eine absolute Adresse, ein Zeitstempel, ein Kommentar) ausgebildet sein oder solche Informationen umfassen.

Zusatz- oder Verwaltungs-Informationen können z.B. Informationen sein, welche die Implementierung des Software-Bausteins oder Objekts in eine neue Software bzw. die Arbeit damit erleichtern, vereinfachen und/oder beschleunigen, aber für eine solche Integration nicht zwingend notwendig sind.

Die Zusatzinformation für das Objekt kann weiterhin eine Informationen enthalten, nach der zur ordnungsgemäßen Funktion des Objekts innerhalb des Software-Bausteins ein weiteres Objekt im Software-Baustein oder der Software-Anwendung und/oder auch ein weiterer Software-Baustein vorliegen muss, wobei das Programmiersystem dann weiterhin derart ausgebildet und eingerichtet sein kann, dass im Rahmen der Erstellung der Software-Anwendung Grundelemente des weiteren Objekts oder des weiteren Software-Bausteins erstellt werden.

Dabei können solche Grundelemente z.B. die grundlegende Einrichtung des weiteren Objekts sein, z.B. das Anlegen bestimmter Variablen, Interface-Member ggf. mit Datentyp sein, wobei die vollständige Definition der Variablen oder Member muss dann später noch erfolgen kann oder muss. Grundelemente können auch die grundlegende Einrichtung des weiteren Software-Bausteins sein, z.B. das Anlegen eines Funktionsbausteins mit einem bestimmten Namen und/oder einer bestimmten Nummer, wobei der Programmcode des Funktionsbausteins dann muss dann z.B. später noch hinzugefügt werden kann oder muss.

Generell können Grundelemente so ausgestaltet sein, dass zwar wesentliche Elemente eines weiteren Objekts oder weiteren Software-Bausteins vorhanden sind, aber weitere später noch hinzuzufügende Informationen / Daten benötigt werden, um dann vollständig funktionsfähig zu sein.

In einer vorteilhaften Ausgestaltung liegt die Transport-Version der Software-Anwendung in einem XML-Format vor beziehungsweise wird in einem XML-Format erstellt. Auf dieses Weise wird ein besonders gut bekanntes Grundformat verwendet, das gut definiert, ausgereift und weithin bekannt ist. Die Transport-Version ist somit auch für einen System-Neuling bzw. System-Fremden auch einfacher verständlich.

Die vorstehend genannte Aufgabe wird auch gelöst von einem Programmiersystem zum Exportieren einer Software-Anwendung,
wobei im Programmiersystem eine Software-Anwendung gespeichert ist und das Programmiersystem zum Erstellen einer Transport-Version der Software-Anwendung ausgebildet und eingerichtet ist, und
wobei die Transport-Version der Software-Anwendung Information zur Erstellung eines Software-Bausteins der Software-Anwendung umfasst.
Dabei weist die Transport-Version der Software-Anwendung weiterhin eine Baustein-Schnittstellen-Information auf, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen.

Dabei können z.B. das Programmiersystem, die Transport-Version der Software-Anwendung und/oder der Software-Baustein und/oder das Objekt und/oder die Zusatzinformation für das Objekt gemäß der vorliegenden Beschreibung ausgebildet sein.

Die vorstehend genannte Aufgabe wird auch gelöst von einem Verfahren zum Erstellen einer Software-Anwendung unter Verwendung einer Transport-Version der Software-Anwendung mit einem Programmiersystem gemäß der vorliegenden Beschreibung, wobei die Software-Anwendung und deren Transport-Version gemäß der vorliegenden Beschreibung ausgebildet sind, Dabei wird im Rahmen der Erstellung der Software-Anwendung ermittelt, ob die in der Zusatzinformation enthaltenen Bedingungen in der Software-Anwendung erfüllt sind,
und/oder
es werden im Rahmen der Erstellung der Software-Anwendung Software-Elemente erstellt, durch deren Ablauf oder deren Anwesenheit in einer Ablauf-Umgebung die für die Software-Anwendung die in der Zusatzinformation enthaltenen Bedingungen erfüllt werden.

Dabei können z.B. das Programmiersystem, die Transport-Version der Software-Anwendung und/oder der Software-Baustein und/oder das Objekt und/oder die Zusatzinformation für das Objekt gemäß der vorliegenden Beschreibung ausgebildet sein.

Die vorstehend genannte Aufgabe wird auch gelöst von einem Verfahren zum Erstellen einer Transport-Version zu einer Software-Anwendung unter Verwendung eines Programmiersystems gemäß der vorliegenden Beschreibung, wobei die Software-Anwendung und deren Transport-Version gemäß der vorliegenden Beschreibung ausgebildet sind. Dabei wird der Transport-Version der Software-Anwendung eine Baustein-Schnittstellen-Information hinzugefügt, die eine Zusatz information für ein Objekt des Software-Bausteins umfasst, wobei
die Zusatzinformation Informationen über Bedingungen enthält, die zur ordnungsgemäßen Funktion des Objekts innerhalb Software-Bausteins erfüllt sein müssen.

Dabei können z.B. das Programmiersystem, die Transport-Version der Software-Anwendung und/oder der Software-Baustein und/oder das Objekt und/oder die Zusatzinformation für das Objekt gemäß der vorliegenden Beschreibung ausgebildet sein.

Die vorstehend genannte Aufgabe wird auch gelöst von einem Computerprogrammprodukt, das auf einem computergeeigneten Medium gespeichert ist und direkt in den internen Speicher eines digitalen Computers geladen werden kann, wobei das Computerprogrammprodukt Softwarecodeabschnitte umfasst, mit welchen die vorstehend genannten Verfahrensschritte ausgeführt werden, wenn es auf einem Computer läuft,
oder die als Transport-Version einer Software-Anwendung gemäß der vorliegenden Beschreibung ausgebildet sind.

Ganz generell ist es eine wesentliche Idee der vorliegenden Erfindung, mit der in der vorliegenden Beschreibung erläuterten Vorgehensweise eine offene und z.B. System-, PLC- oder Computer-sprachunabhängige Modellierung von Schnittstelleninformation an den Verwendungsstellen von z.B. Computer-, System- oder PLC-Software zu schaffen.

Weitere vorteilhafte Ausgestaltungen finden sich in den Unteransprüchen.

Im Folgenden wird die Erfindung beispielhaft mit Bezug auf die beiliegenden Figuren näher erläutert.

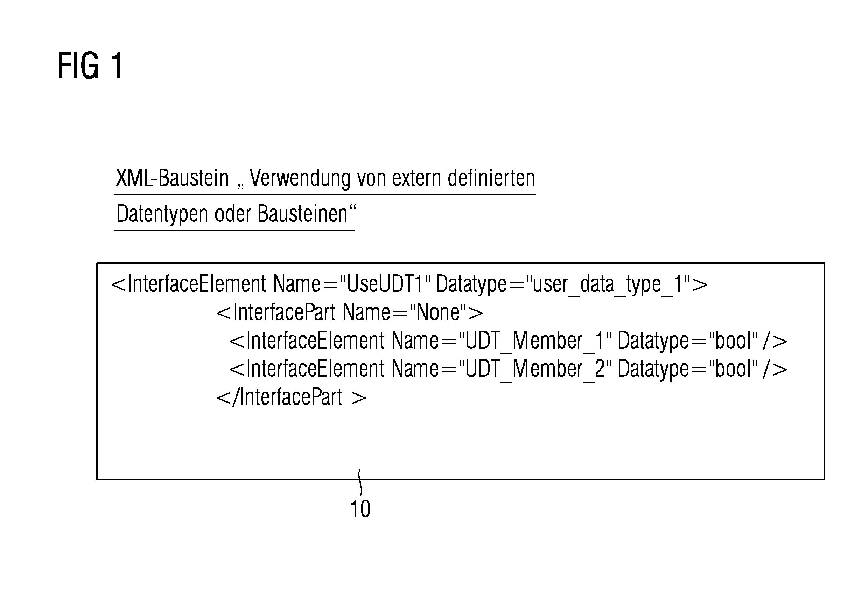

Die Figuren 1 bis 3 zeigen Verwendungsstellen, die in XML modelliert werden, wobei die Schnittstelleninformation daran angegeben ist.

In den hier dargestellten Beispielen wird die bekannte XML-Sprache verwendet, so dass die XML-Code-Abschnitte gemäß der bekannten XML-Definition verstanden werden können.

Figur 1 zeigt einen XML-Programmbaustein 10, der die Verwendung von extern definierten Datentypen oder Bausteinen beschreibt bzw. näher definiert.

Dabei könnte an einer Verwendungsstelle von dem strukturierten Datentyp User_data_type_1 im Interface eines Funktionbausteins in der entsprechenden Programmiersprache wie nachfolgend aussehen:

```
   "VAR_INPUT
      UseUDT1 : "User_data_type_1";
   END_VAR"
```

Dabei ist dann an einer anderen Stelle der Software-Anwendung der Datentyp User_data_type_1 wie folgt definiert:

```
 "TYPE "User_data_type_1"
 VERSION : 0.1
   STRUCT
      UDT_Member_1 : Bool;
      UDT_Member_2 : Bool;
   END_STRUCT;
 END_TYPE"
```

Im in Figur 1 dargestellten XML-Baustein 10 lässt sich diese Definition z.B. gemeinsam mit den entsprechenden Programmbefehlen exportieren, so dass beim Importieren des Programmbefehls anhand des XML-Bausteins 10 die vollständige Format-Information beim Importieren wieder hergestellt werden kann und der zugehörige Programmbefehl dann auch wie vorgesehen arbeitet.

Figur 2 zeigt einen XML-Programmbaustein 20, der die Verwendung von externen Bausteinen beschreibt bzw. näher definiert.

Figur 3 zeigt einen XML-Programmbaustein 30, der die Verwendung von externen globalen Objekten (Tags, ...) beschreibt bzw. näher definiert.

Weiterhin können an der Verwendungsstelle zusätzlich zur Schnittstelleninformation des verwendeten Objekts auch Verwaltungsinformationen zum verwendeten Objekt angegeben sind (absolute Adresse, Zeitstempel, Kommentar, ...). Diese Information kann bei der Wiederverwendung eines Bausteins genutzt werden, um zusätzliche Konsistenzprüfungen oder eine bessere Benutzerführung zu realisieren.

Weiterhin kann vorgesehen sein, dass bei der Wiederverwendung eines Bausteins für die verwendeten Objekte bereits vollständige oder "Rumpfobjekte" angelegt werden, sofern sie in der neuen Umgebung nicht vorhanden sind.

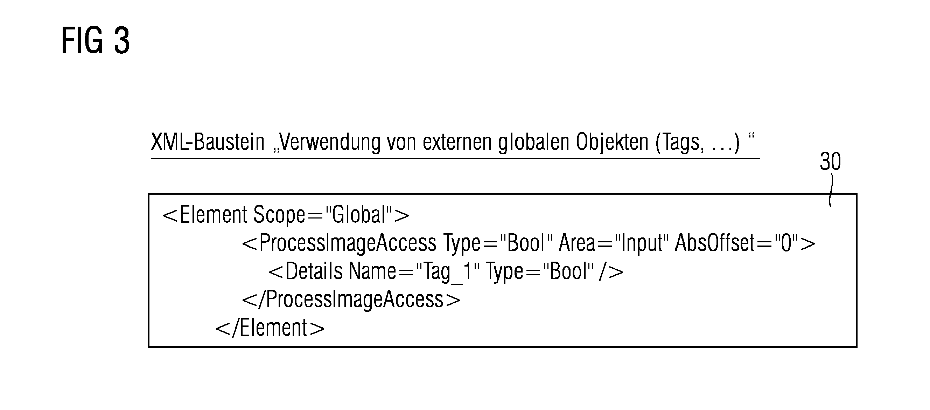

Diesbezüglich ist ein Beispiel für ein vollständiges Objekt: Im in Figur 3 dargestellten Fall kann ein globales Tag mit Namen "Tag_1", Datentyp "bool" für die absolute Adresse "0" im "Input"-Bereich angelegt werden

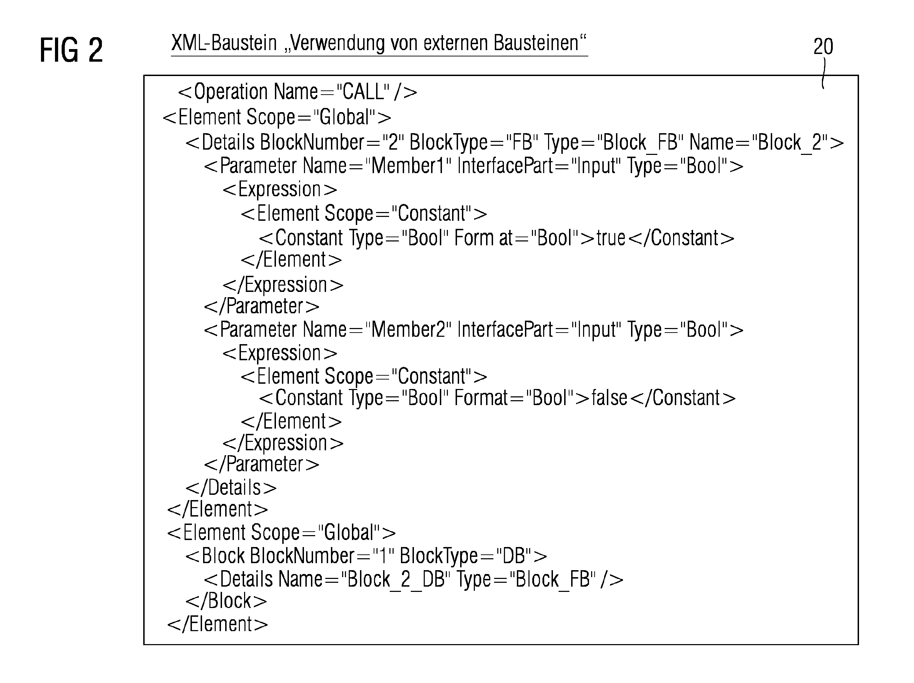

Ein Beispiel für ein "Rumpfobjekte" wäre: Im in Figur 2 dargestellten Fall kann ein Funktionsbaustein mit Namen "Block_2" und Nummer "2" angelegt werden. Im Interface können bereits die Member "Member1"und "Member2", jeweils mit Datentyp "bool" angelegt werden. Der Code des Bausteins kann bzw. muss noch z.B. manuell ergänzt werden.

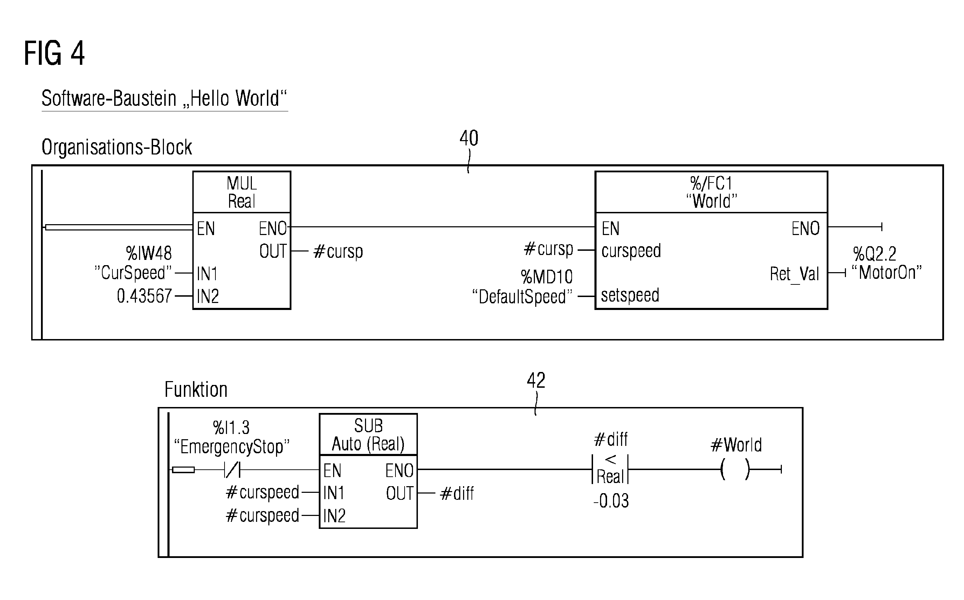

Figur 4 zeigt ein Beispiel für ein eine Software-Anwendung mit dem Namen "Hello World", die aus zwei Software-Bausteinen, einem Organisations-Block "OB" 40 und einer Funktion "FC" 42 besteht. Diese sind in einer graphischen Programmiersprache verfasst, wie sie z.B. im sogenannten "TIA-Portal" oder auch "STEP 7" der Siemens AG verwendet wird. Sie sind jeweils Beispiele für eine Software-Anwendung bzw. Software-Bausteine gemäß der vorliegenden Beschreibung.

Dabei ist die Funktion 42 ein Stück Code das von einem anderen Stück Code, den ein Anwender geschrieben hat, aufgerufen werden kann.

Der Organisation-Block 40 ist ein Stück Code das vom Betriebssystem (auch ein anderes Stück Code) aufgerufen werden kann, aber eben nicht vom Benutzer.

Die Funktionalität der Anwendung "Hello World" ist wie folgt: Der OB 40 multipliziert zwei Zahlen (CurSpeed und eine Konstante). Falls dies erfolgreich (kein Überlauf) dann wird der FC 42 aufgerufen. Dieser bekommt das Multiplikationsergebnis und eine weitere Zahl (DefaultSpeed) als Parameter mit.

Der FC 42 prüft wie groß die Differenz zwischen zwei Zahlen ist und sollte sie größer als -0.03 Bratwursteinheiten sein, dann wir der Ausgang TRUE, sonst bleibt er FALSE.

Sollte der EmergencyStop gedrückt worden sein, dann bleibt der Ausgang FALSE.

Der OB 40 reicht das FC-Ergebnis an einen PLC-Ausgang weiter.

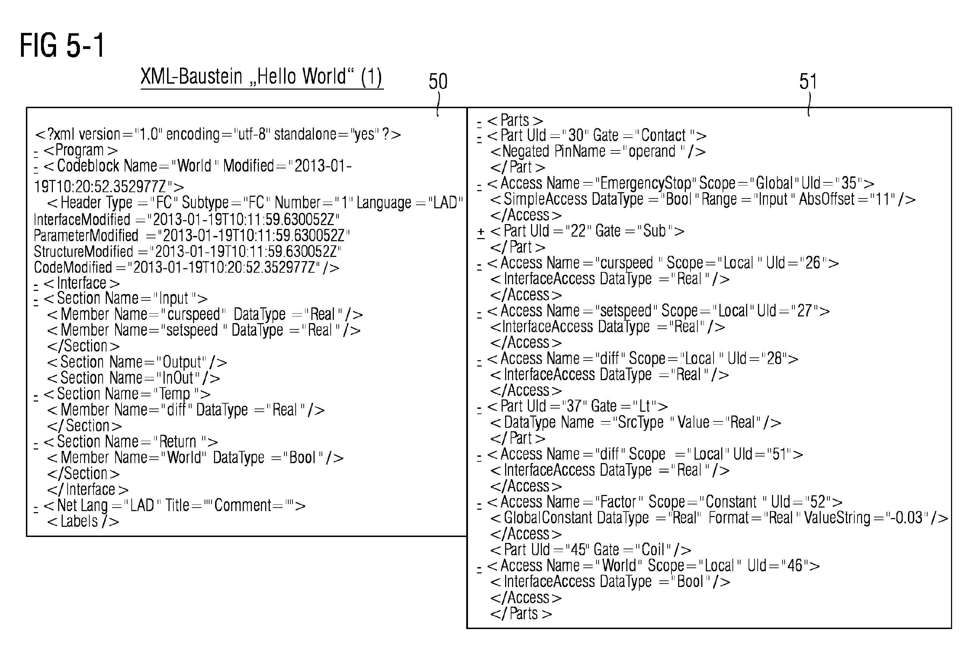

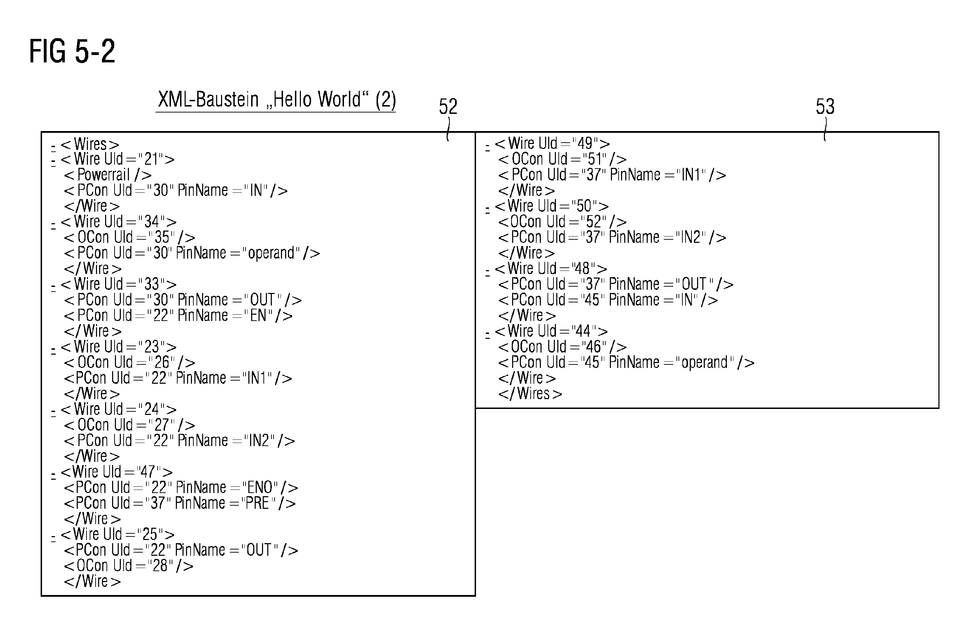

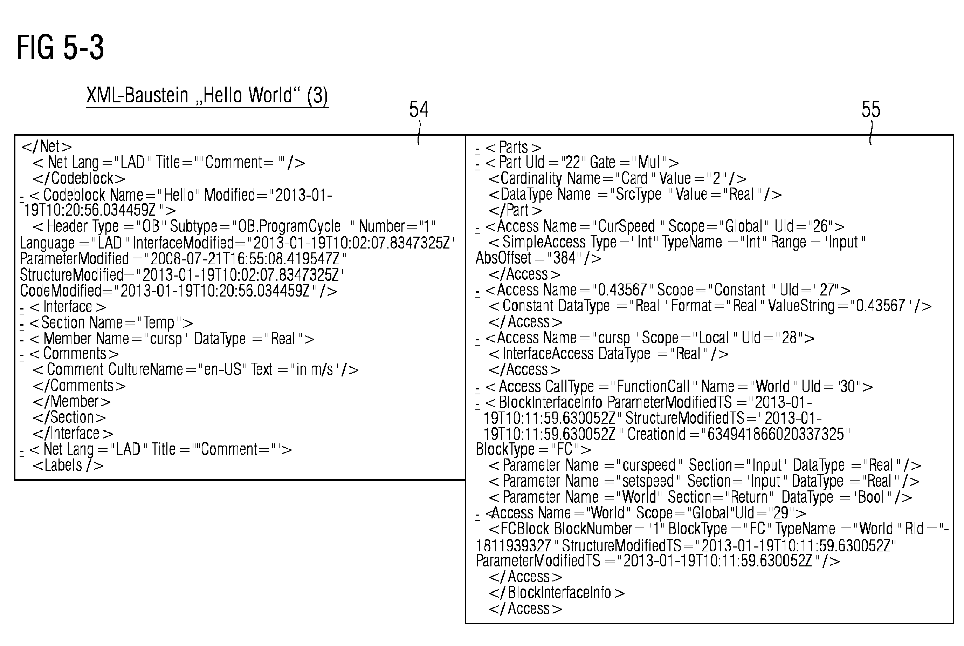

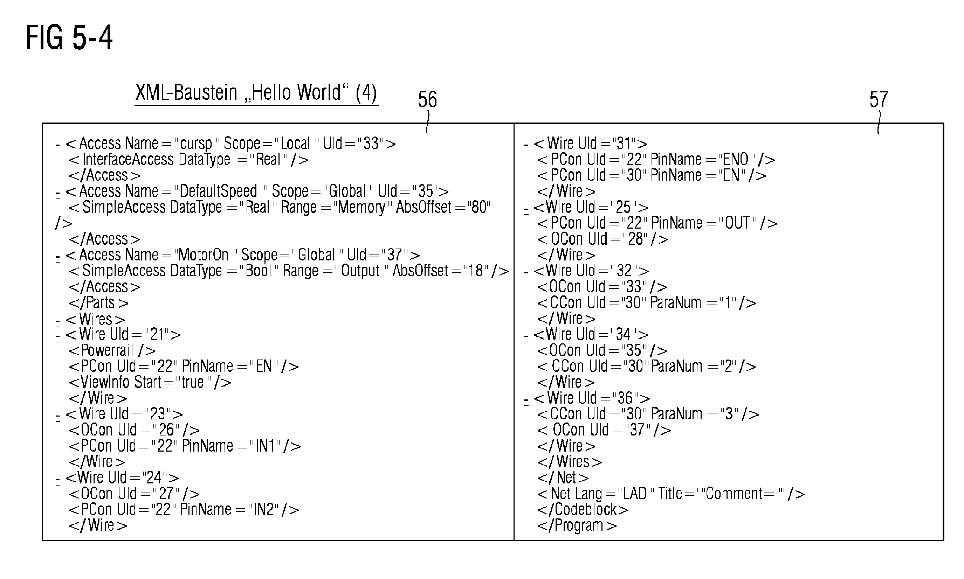

Diese Software-Anwendung "Hello World" kann z.B. vollständig aus einer in den Figuren 5-1, 5-2, 5-3 und 5-4 dargestellten XML-Export-Version 50, 51, 52, 53, 54, 55, 56, 57 erstellt werden, wobei die "Hello-World"-XML-Export-Version alle Zugriffs-, Format- und sonstigen notwendigen Informationen enthält.

Auch hier wird die bekannte XML-Sprache verwendet, so dass die XML-Code-Abschnitte gemäß der bekannten XML-Definition verstanden werden können.

So kann z.B. zu dem in Figur 4 dargestellt Programm-code 40, 42 des "Hello World" Programms die in den Figuren Figuren 5-1, 5-2, 5-3 und 5-4 dargestellten XML-Export-Version 50, 51, 52, 53, 54, 55, 56, 57 erstellt werden und dann später in einem z.B. weiteren System wieder unter Erhaltung der vollen Funktionalität wieder importiert werden. Dabei müssen keine gesonderten Notizen oder Informationen parallel gespeichert werden, der Software-Code und die Gesamtinformation, die zu dessen Ablauf notwendig ist, ist in der XML-Export-Datei 50, 51, 52, 53, 54, 55, 56, 57 gebündelt.

## Patentansprüche

1. Programmiersystem zum Importieren einer Software-Anwendung (40, 42),
wobei im Programmiersystem eine Transport-Version (50, 51, 52, 53, 54, 55, 56, 57) der Software-Anwendung verfügbar ist und das Programmiersystem zum Erstellen der Software-Anwendung (40, 42) unter Verwendung der Transport-Version (50, 51, 52, 53, 54, 55, 56, 57) ausgebildet und eingerichtet ist,
wobei die Transport-Version (50, 51, 52, 53, 54, 55, 56, 57) der Software-Anwendung (40, 42) Information zur Erstellung eines Software-Bausteins (40, 42) der Software-Anwendung (40, 42) umfasst,
**dadurch gekennzeichnet,**
**dass** die Transport-Version (50, 51, 52, 53, 54, 55, 56, 57) der Software-Anwendung weiterhin eine Baustein-Schnittstellen-Information umfasst, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen,
und
**dass** weiterhin das Programmiersystem derart ausgebildet und eingerichtet ist, dass
ermittelt wird, ob die in der Zusatzinformation enthaltenen Bedingungen in der Software-Anwendung erfüllt sind.

2. Programmiersystem nach Anspruch 1
**dadurch gekennzeichnet,**
**dass**
- Software-Elemente in die Software-Anwendung eingefügt und/oder erstellt werden, durch deren Ablauf oder deren Anwesenheit in einer Ablauf-Umgebung die für die Software-Anwendung die in der Zusatzinformation enthaltenen Bedingungen erfüllt werden,
und / oder
- Software-Elemente der Software-Anwendung derart geändert werden, dass durch deren Ablauf oder deren Anwesenheit in einer Ablauf-Umgebung für die Software-Anwendung die in der Zusatzinformation enthaltenen Bedingungen erfüllt werden.

3. Programmiersystem zum Importieren einer Software-Anwendung (40, 42),
wobei im Programmiersystem eine Transport-Version (50, 51, 52, 53, 54, 55, 56, 57) der Software-Anwendung (40, 42) verfügbar ist und das Programmiersystem zum Erstellen der Software-Anwendung (40, 42) unter Verwendung der Transport-Version (50, 51, 52, 53, 54, 55, 56, 57) ausgebildet und eingerichtet ist,
wobei die Transport-Version (50, 51, 52, 53, 54, 55, 56, 57) der Software-Anwendung (40, 42) Information zur Erstellung eines Software-Bausteins (40, 42) der Software-Anwendung (40, 42) umfasst,
**dadurch gekennzeichnet,**
**dass** die Transport-Version (50, 51, 52, 53, 54, 55, 56, 57) der Software-Anwendung (40, 42) weiterhin eine Baustein-Schnittstellen-Information umfasst, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen,
und
**dass** weiterhin das Programmiersystem derart ausgebildet und eingerichtet ist, dass
im Rahmen der Erstellung der Software-Anwendung Software-Elemente erstellt werden, durch deren Ablauf oder deren Anwesenheit in einer Ablauf-Umgebung die für die Software-Anwendung die in der Zusatzinformation enthaltenen Bedingungen erfüllt werden.

4. Programmiersystem nach einem der Ansprüche 1 bis 3,
**dadurch gekennzeichnet,**
**dass** die Zusatzinformation für das Objekt eine Zustandinformation zu dem Objekt umfassen.

5. Programmiersystem nach einem der Ansprüche 1 bis 3,
**dadurch gekennzeichnet,**
**dass** die Zusatzinformation für das Objekt eine Informationen enthält, nach der zur ordnungsgemäßen Funktion des Objekts innerhalb des Software-Bausteins ein weiteres Objekt im Software-Baustein oder der Software-Anwendung und/oder auch ein weiterer Software-Baustein vorliegen muss,
wobei das Programmiersystem weiterhin derart ausgebildet und eingerichtet ist, dass
im Rahmen der Erstellung der Software-Anwendung Grundelemente des weiteren Objekts oder des weiteren Software-Bausteins erstellt werden.

6. Programmiersystem nach einem der Ansprüche 1 bis 3,
**dadurch gekennzeichnet,**
**dass** Transport-Version der Software-Anwendung in einem XML-Format erstellt wird oder vorliegt.

7. Programmiersystem zum Exportieren einer Software-Anwendung (40, 42),
wobei im Programmiersystem eine Software-Anwendung (40, 42) gespeichert ist und das Programmiersystem zum Erstellen einer Transport-Version (50, 51, 52, 53, 54, 55, 56, 57) der Software-Anwendung (40, 42) ausgebildet und eingerichtet ist,
wobei die Transport-Version (50, 51, 52, 53, 54, 55, 56, 57) der Software-Anwendung (40, 42) Information zur Erstellung eines Software-Bausteins der Software-Anwendung (40, 42) umfasst,
**dadurch gekennzeichnet,**
**dass** die Transport-Version (50, 51, 52, 53, 54, 55, 56, 57) der Software-Anwendung (40, 42) weiterhin eine Baustein-Schnittstellen-Information umfasst, wobei die Baustein-Schnittstellen-Information eine Zusatzinformation für ein Objekt des Software-Bausteins umfasst, und die Zusatzinformation Informationen über Bedingungen enthält, die zur ordnungsgemäßen Funktion des Objekts innerhalb Software-Bausteins erfüllt sein müssen.

8. Programmiersystem nach Anspruch 7,
**dadurch gekennzeichnet,**
**dass** die Transport-Version der Software-Anwendung und/oder der Software-Baustein und/oder das Objekt und/oder die Zusatzinformation für das Objekt gemäß einem der Ansprüche 1 bis 6 ausgebildet ist.

9. Verfahren zum Erstellen einer Software-Anwendung unter Verwendung einer Transport-Version der Software-Anwendung mit einem Programmiersystem gemäß einem der Ansprüche 1 bis 6, wobei die Software-Anwendung und deren Transport-Version gemäß einem der Ansprüche 1 bis 6 ausgebildet sind, wobei
im Rahmen der Erstellung der Software-Anwendung ermittelt wird, ob die in der Zusatzinformation enthaltenen Bedingungen in der Software-Anwendung erfüllt sind, und/oder
im Rahmen der Erstellung der Software-Anwendung Software-Elemente erstellt werden, durch deren Ablauf oder deren Anwesenheit in einer Ablauf-Umgebung die für die Software-Anwendung die in der Zusatzinformation enthaltenen Bedingungen erfüllt werden.

10. Verfahren zum Erstellen einer Transport-Version zu einer Software-Anwendung unter Verwendung eines Programmiersystems gemäß einem der Ansprüche 7 oder 8, wobei die Software-Anwendung und deren Transport-Version gemäß einem der Ansprüche 7 oder 8 ausgebildet sind, wobei
der Transport-Version der Software-Anwendung eine Baustein-Schnittstellen-Information hinzugefügt wird, die eine Zusatzinformation für ein Objekt des Software-Bausteins umfasst, und wobei
die Zusatzinformation Informationen über Bedingungen enthält, die zur ordnungsgemäßen Funktion des Objekts innerhalb Software-Bausteins erfüllt sein müssen.

11. Computerprogrammprodukt, das auf einem computergeeigneten Medium gespeichert ist und direkt in den internen Speicher eines digitalen Computers geladen werden kann, wobei das Computerprogrammprodukt Softwarecodeabschnitte umfasst, mit welchen die Verfahrensschritte gemäß einem der Ansprüche 9 oder 10 ausgeführt werden, wenn es auf einem Computer läuft.

12. Computerprogrammprodukt, das auf einem computergeeigneten Medium gespeichert ist und direkt in den internen Speicher eines digitalen Computers geladen werden kann, wobei das Computerprogrammprodukt Softwarecodeabschnitte umfasst, die als Transport-Version einer Software-Anwendung gemäß einem der Ansprüche 1 bis 6 ausgebildet ist.
